# EUROPÄISCHE PATENTSCHRIFT

(11) **EP 2 328 734 B1**
(45) Veröffentlichungstag und Bekanntmachung des Hinweises auf die Patenterteilung: **28.08.2013**
(21) Anmeldenummer: 09782702.6
(22) Anmeldetag: 07.09.2009
(51) Int. Cl.: B29C 45/16, B29C 67/24

(54) **VERFAHREN UND VORRICHTUNG ZUR HERSTELLUNG VON KUNSTSTOFFPRODUKTEN MIT INTEGRIERTER VERSTÄRKUNGSSTRUKTUR**
METHOD AND APPARATUS FOR PRODUCING PLASTIC PRODUCTS WITH INTEGRATED REINFORCING STRUCTURE
PROCÉDÉ ET DISPOSITIF POUR LA FABRICATION DE PRODUITS EN MATIÈRE PLASTIQUE AYANT UNE STRUCTURE DE RENFORCEMENT INTÉGRÉE

(30) Priorität: 16.09.2008 DE 102008047564
(43) Veröffentlichungstag der Anmeldung: 08.06.2011
(73) Patentinhaber: KraussMaffei Technologies GmbH, 80997 München (DE)
(72) Erfinder: KROLL, Lothar, 03124 Dresden (DE); NENDEL, Wolfgang, 09569 Oederan (DE); HELBIG, Frank, 04618 Göpfersdorf (DE); HOYER, Karl-Heinz, Markneukirchen 08258 (DE); ZUCKER, Tino, 09456 Mildenau (DE); WÜRTELE, Martin, 86316 Friedberg (DE)
(74) Vertreter: Wilhelm, Ludwig
(86) Internationale Anmeldenummer: PCT/EP2009/061562
(87) Internationale Veröffentlichungsnummer: WO 2010/031710

(56) Entgegenhaltungen:
- EP-A1- 1 612 024
- DE-A1- 4 301 444
- DE-A1-102006 016 200
- US-A1- 2004 018 337
- US-A1- 2005 156 352

## Beschreibung

Die vorliegende Erfindung betrifft ein Verfahren und eine Vorrichtung zur Herstellung von Kunststoffprodukten mit integrierter Verstärkungsstruktur gemäß den Oberbegriffen der Ansprüche 1 bzw. 8.

Aus der US 2004/0018337 A1 ist die Herstellung von Kunststoffprodukten bekannt, die eine weitgehend freiliegende Gewebeoberfläche aufweisen. Im Gegensatz zu einer derartigen Einarbeitung von Geweben zu Dekorzwecken ist es hinreichend bekannt, Kunststoffprodukte unter Verwendung von Fasern zu verstärken, um besonderen mechanischen oder physikalischen Anforderungen gerecht zu werden. Insbesondere können besonders belastete Kunststoffprodukte mit zusätzlichen Verstärkungsstrukturen versehen sein. Diese Verstärkungen oder funktionale Komponenten werden umso wichtiger, als es einen kontinuierlichen Trend zu dünnwandigeren bzw. System-Kunststoffprodukten gibt. Dieser Trend resultiert insbesondere aus dem Verlangen, Material einzusparen, welches mit steigenden Rohstoffkosten wesentlich zum Herstellpreis eines Produktes beiträgt.

Bereits früher war es bekannt, bei bestimmten Produkten Verrippungen oder ähnliche externe Elemente zur mechanischen Verstärkung vorzusehen. Überdies ist es bekannt, getränkte oder imprägnierte Kunststoffmatten mit einem Kunststoffmaterial zu verpressen oder umzuformen und dann zu hinterspritzen. Die US 2005/0156352 A1 offenbart ein gattungsgemäßes Verfahren zur Herstellung von Kunststoffprodukten mit integrierter Verstärkungsstruktur.

Weiterhin gibt es seit einiger Zeit den Trend, mit Spritzgieß- oder Extrusionsmaschinen Fasern, insbesondere Glasfasern in die Kunststoffschmelze einzuarbeiten, um so die mechanischen Eigenschaften im gesamten Produkt zu verbessern. In diesen faserbeladenen Kunststoffen ist die Faserorientierung oft durch das Fließverhalten bedingt, so dass die Wirkrichtung nicht ohne weiteres vorgegeben werden kann. Überdies sind die meist kurzen Faserelemente bezüglich ihrer Richtung oft amorph und wahllos angeordnet. Damit ist es nicht möglich Verstärkungen in bestimmten Belastungsrichtungen auszubilden. Überdies ist es bei Spritzguss- oder Extrusionsanwendungen bislang nur möglich, begrenzte Faserlängen zu erzeugen, da die Fasern in der Plastifiziereinrichtung gebrochen, abgeschnitten oder anderweitig zerteilt werden.

In zunehmendem Maße wird Kunststoff in vielen High-Tech-Bereichen eingesetzt, bei denen nur in bestimmten Bereichen oder gerichtet hohe Belastungsspitzen vorliegen. Bei solchen Produkten ist es nicht unbedingt notwendig, Verstärkungen über das gesamte Produkt vorzusehen; vielmehr könnten diese Teile auch nur partiell verstärkt werden, so dass die besonders belasteten Bereiche den besonderen mechanischen oder physikalischen Anforderungen standhalten. Dennoch sollten die Verstärkungsmaßnahmen in der Regel nicht erkennbar sein. Vielmehr ist es zumeist erwünscht, dass die entsprechenden Produkte über die gesamte Oberfläche gleiche optische und haptische Eigenschaften aufweisen.

Aufgabe der vorliegenden Erfindung ist es daher, ein Verfahren und eine Vorrichtung zur Herstellung von Kunststoffprodukten mit integrierter Verstärkungsstruktur anzugeben, mit dem bzw. der die vorgenannten Nachteile vermieden und diese gewünschten Eigenschaften erreicht werden.

Diese Aufgabe wird durch die in den Ansprüchen 1 und 8 genannten Merkmale verfahrensmäßig bzw. vorrichtungsmäßig gelöst.

Vorteilhafte Weiterbildungen sind Gegenstand der abhängigen Ansprüche.

Demgemäß ist ein Kerngedanke der vorliegenden Erfindung darin zu sehen, dass zunächst ein biegeschlaffes Gewebe (allg. Textil) auf die Kavitätsoberfläche eines Formwerkzeugs aufgebracht wird. Anschließend werden durch unterschiedliche Zusammenstellungen von Kavitätshälften und Ausbilden von Formwerkzeugen zu beiden Seiten dieses Gewebes Schichten, insbesondere Kunststoffschichten gebildet. Insgesamt erreicht man auf einfache Weise eine kostengünstige und schnelle Herstellung eines Kunststoffproduktes mit einem Sandwichaufbau mit einer einzigen Vorrichtung, bei dem ein Gewebe (insbesondere Textilgewebe) in zumindest zwei Schichten eingebettet ist und eine entsprechende Verstärkung sicherstellt.

Gemäß einer weiteren vorteilhaften Ausführungsform ist es überdies möglich, eine Kunststoffschicht in einem weiteren Verfahrensschritt mit einer Oberflächen-, Harz- oder Lackschicht zu beschichten, so dass eine dünne Beschichtung oder Lackierung erreicht ist.

Vorzugsweise wird ein Kunststoffmaterial für eine Schicht mittels eines Extrudier- oder Spritzgussverfahren hergestellt und eingebracht. Erfindungsgemäß geschieht dies auf der gleichen Vorrichtung, die evtl. als Schiebetisch, Drehtisch oder Wendeplattenmaschine ausgebildet sein kann.

Alternativ kann das Kunststoffmaterial auch durch ein Reaktionsgießverfahren beispielsweise mit Polyurethan- oder einem anderen Duroplastmaterial hergestellt und eingebracht werden.

Beim Einlegen der Gewebestruktur können auch nur bestimmte Bereiche des Kunststoffproduktes ausgewählt sein. Damit wäre auch die Ausbildung von partiellen Verstärkungsstrukturen möglich. Insgesamt können damit innerhalb des Kunststoffproduktes Verstärkungsbereiche mit höherer, geringerer oder gar keiner Verstärkung ausgebildet werden.

Vor jedem Aufbringen einer Schicht können funktionale Elemente auf das bisher gebildete (Zwischen-) Produkt aufgebracht werden. Nach der Aufbringung zumindest der letzten Schicht sind diese funktionalen Elemente dann in das Kunststoffprodukt integriert.

Auf diese Weise können separate Einrichtungen wie Sensoren, Lampen, Aktuatoren eingesetzt werden oder andererseits funktionalen Elemente integral mit der Verstärkungsstruktur ausgebildet sein. So können beispielsweise metallische Fäden in die Verstärkungsstruktur eingearbeitet werden, die eine elektrische Leitungsfunktion in Abhängigkeit von physikalischen Zuständen erfüllen und beispielsweise einen Riss oder Bruch detektieren oder aber auch eine andere Belastung - wie eine Dehnbelastung - sensieren.

Weitere Vorteile und Merkmale gehen aus den Patentansprüchen hervor.

Nachfolgend wird die vorliegende Erfindung anhand verschiedener Ausführungsbeispiele und mit Bezug auf die beigefügten Zeichnungen näher erläutert. Die Zeichnungen zeigen in
- Figur 1: eine schematische Abbildung einer konkreten Ausführungsform einer erfindungsgemäßen Maschine, mit der das erfindungsgemäße Verfahren durchgeführt werden kann,
- Figur 2: eine schematische Abbildung wie Fig. 1, jedoch in einem zweiten, geöffneten Verfahrenszustand der Maschine,
- Figur 3: eine schematische Abbildung wie Fig. 1, jedoch in einem dritten Verfahrenszustand der Maschine,
- Figur 4: eine schematische Abbildung wie Fig. 1, jedoch in einem vierten Verfahrenszustand der Maschine,
- Figur 5: eine schematische Abbildung wie Fig. 1, jedoch in einem fünften Verfahrenszustand der Maschine,
- Figur 6: eine schematische Abbildung wie Fig. 1, jedoch in einem sechsten Verfahrenszustand der Maschine,
- Figur 7: eine schematische Abbildung wie Fig. 1, jedoch in einem siebten Verfahrenszustand der Maschine,
- Figur 8: eine schematische Abbildung wie Fig. 1, jedoch in einem achten Verfahrenszustand der Maschine und
- Figur 9: eine schematische Abbildung wie Fig. 1, jedoch in einem neunten Verfahrenszustand der Maschine.

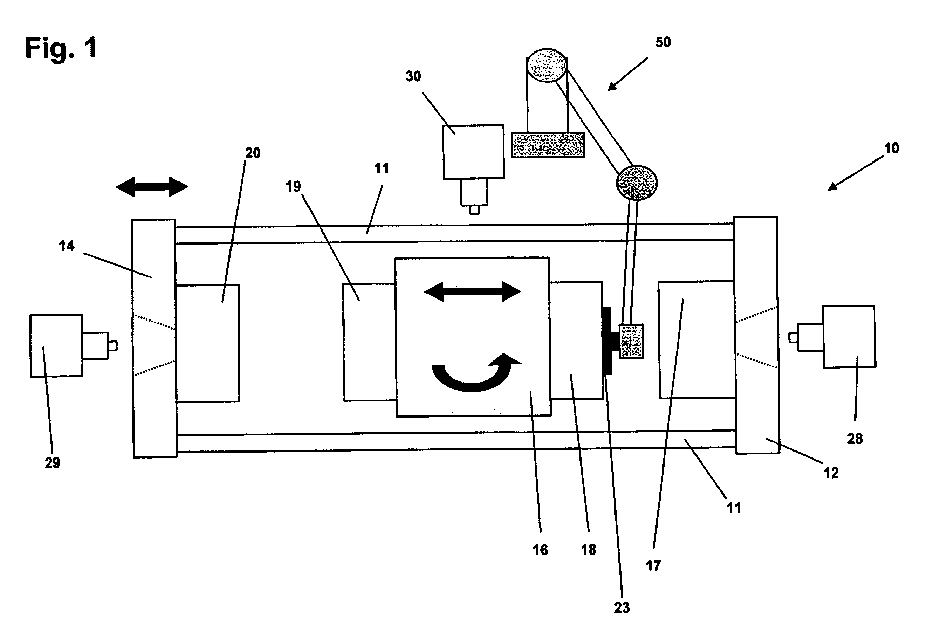

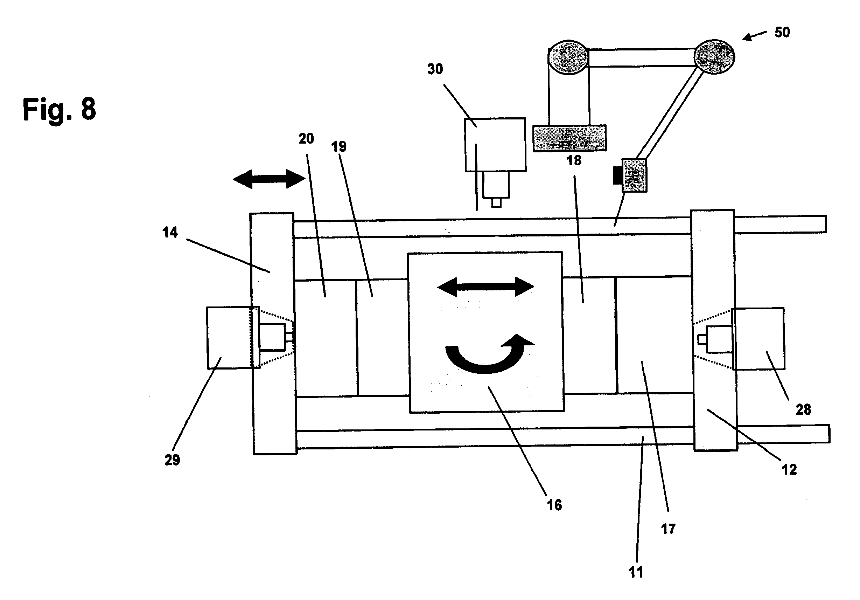

Eine konkrete Ausführungsform einer erfindungsgemäßen Vorrichtung zur Durchführung des erfindungsgemäßen Verfahrens wird nachfolgend mit Bezug auf die Figuren 1 bis 9 beschrieben. Darin ist eine Schließeinheit 10 zu erkennen, die eine feste Formaufspannplatte 12 und eine bewegliche Formaufspannplatte 14 (Beweglichkeit siehe Doppelpfeil) aufweist, welche über Holme 11 miteinander verbunden sind. Zwischen den beiden Aufspannplatten 12 und 14 ist eine in etwa kubisch ausgebildete Wendeplatte 16 auf einem Wendeplattenteller (nicht dargestellt) angeordnet, wobei die Wendeplatte 16 zusammen mit dem nicht dargestellten Wendeplattenteller ebenfalls in Richtung der beweglichen Aufspannplatte verschieblich und zudem noch drehbar (vgl. Pfeile) angeordnet sind.

Sowohl an der festen Formaufspannplatte 12 als auch an der beweglichen Formaufspannplatte 14 sind Formwerkzeughälften 17 bzw. 20 angeordnet, die sich - wie nachfolgend noch darzustellen ist - voneinander in ihrer Kavitätsausnehmung unterscheiden. Überdies sind weitere Formwerkzeughälften 18 und 19 an gegenüberliegenden Seiten der Wendeplatte 16 befestigt. Auch diese Formwerkzeughälften sind unterschiedlich ausgebildet. Die Formwerkzeughälfte 17 kann dabei jeweils mit den Formwerkzeughälften 18 und 19 ein Formwerkzeug bilden (erstes und zweites Formwerkzeug). Überdies kann die Formwerkzeughälfte 20 ebenfalls mit der Formwerkzeughälfte 19 ein Formwerkzeug bilden (drittes Formwerkzeug). Natürlich kann die Schließeinheit auch alternativ ausgebildet sein, beispielsweise als Schiebe- oder Drehtisch-Schließeinheit. Entscheidend ist lediglich, dass drei oder mehr Kavitäten gebildet werden können.

Sowohl im Bereich der festen wie auch der beweglichen Aufspannplatten 12 und 14 sind (nur schematisch dargestellt) Plastifizier- und Einspritzeinheiten 28 und 29 vorgesehen, die über entsprechende Trichter an die jeweiligen Formwerkzeuge angedockt werden können. Überdies ist eine weitere Plastifizier- und Einspritzeinheit 30 vorgesehen, die als sogenannte "bolt-on-unit" seitlich (alternativ auch oberhalb) der Schließeinheit angeordnet ist und - zumindest in einer Stellung unmittelbar an die Wendeplatte 16 angedockt werden kann, von wo aus die Schmelze über entsprechende Kanäle über eine der Formwerkzeughälften in eine Kavität geführt werden kann. Alternativ ist es auch möglich, die als "bolt-on-unit" vorgesehene Schließeinheit unmittelbar an einer Werkzeughälfte (z.B. Werkzeughälfte 19) andockbar auszubilden.

In an sich bekannter Weise können mit den Plastifizier- und Einspritzeinheiten 28 bis 30 Kunststoffschmelzen in die Kavität eines zugeordneten Formwerkzeugs eingespritzt werden.

Alternativ ist es auch möglich, anstelle einer Plastifizier- und Einspritzeinrichtung eine andere Einbringeinheit für ein Kunststoff-, Harz-, Lack-, Thermoplast- oder Duroplastmaterial vorzusehen, wie nachfolgend noch klar wird.

In den Figuren 1 bis 9 ist überdies eine Einrichtung 50 zur Einbringung eines biegeschlaffen Gewebes (allg. Textiles) in die Schließeinheit zu erkennen. Diese Einrichtung 50 umfasst einen Robotarm, an dessen Armende eine Aufnahmeeinheit zur Aufnahme des biegeschlaffen Gewebes (Textiles) angeordnet ist. Mit diesem Robotarm kann ein biegeschlaffes Gewebe (Textil) aufgenommen und in geöffnetem Zustand der Schließeinheit auf die Kavitätsoberfläche einer Werkzeughälfte (vorliegend der Werkzeughälfte 18) aufgebracht werden.

Die Arbeitsweise der vorgenannt beschriebenen Ausführungsform ist wie folgt:

Beim Start des vorliegend beschriebenen Ausführungszyklus ist die Schließeinheit 10 der Spritzgießmaschine wie in Figur 1 dargestellt in geöffnetem Zustand, die Formwerkzeughälfte 18 ist der Formwerkzeughälfte 17 zugeordnet und die Formwerkzeughälfte 19 ist der Formwerkzeughälfte 20 zugeordnet. Die jeweiligen Plastifizier- und Spritzgießeinheiten 28 bis 30 sind von den Formwerkzeugen abgehoben.

Mit dem Robotarm 50 wird ein biegeschlaffes Gewebe (Textil) 23, bei dem es sich um ein Gewebe, ein Vlies, ein Gestrick, ein Gewirk, ein Geflecht oder dergleichen daraus gebildete textile Verbundstoffe handeln kann, aufgenommen und auf die Kavitätsoberfläche des Formwerkzeugs 18 aufgebracht. Insofern sind Mittel vorgesehen, um das biegeschlaffe Gewebe (Textil) 23 auf der Kavitätsfläche der Formwerkzeughälfte 18 zu halten. Dies können beispielsweise Vakuummittel sein. Evtl. kann die Kavitätsoberfläche auch mit einem Haftmittel benetzt oder mit geeigneten mechanischen Aufnahmeelementen sein, um das biegeschlaffe Gewebe (Textil) zu fixieren.

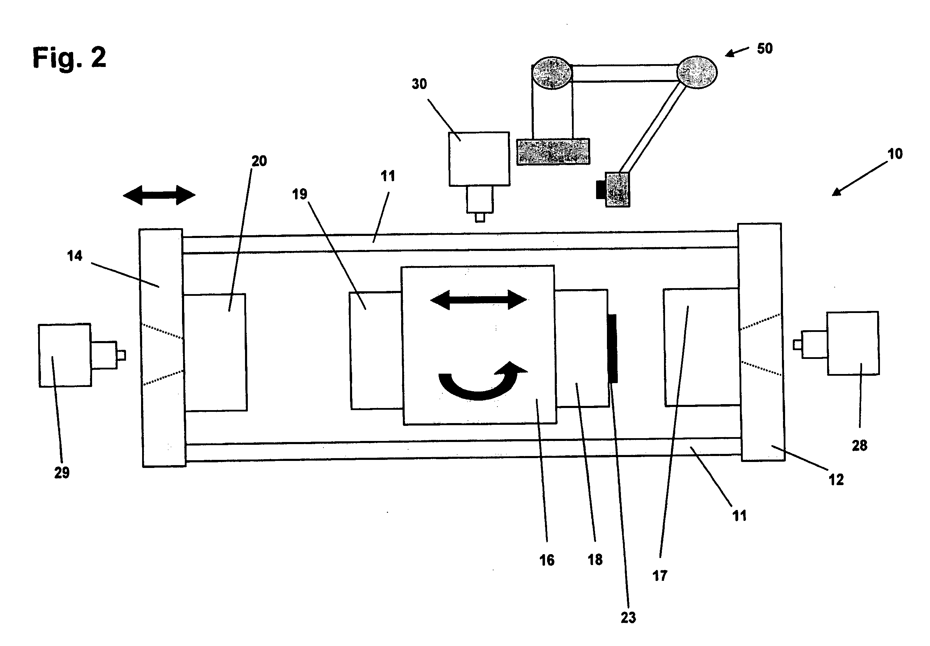

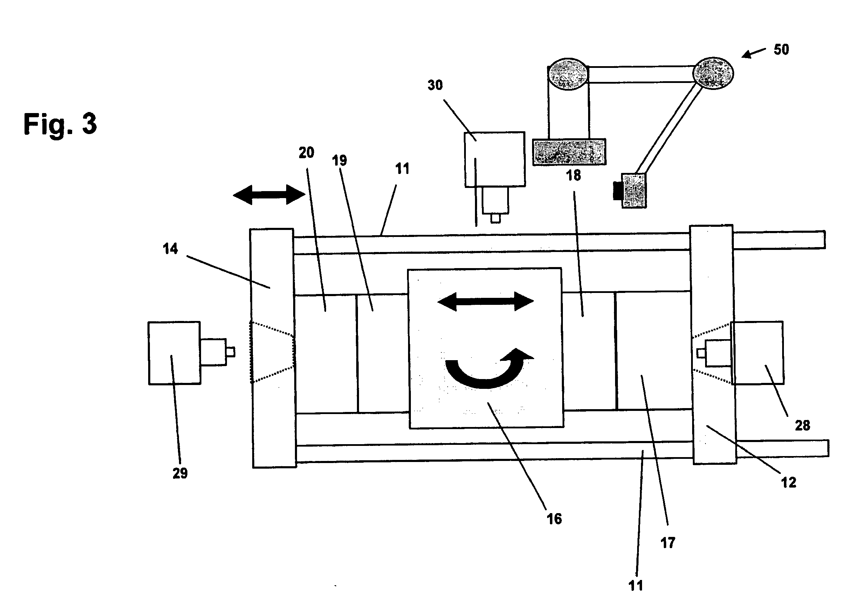

Nach dem Einbringen des biegeschlaffen Gewebes (Textiles) wird der Robotarm 50 aus der Schließeinheit, insbesondere dem Zwischenraum zwischen den beiden Werkzeughälften 17 und 18 zurückgezogen - wie dies in Figur 2 dargestellt ist, und die Schließeinheit 10 geschlossen (vgl. Fig. 3). Dabei wird mit den Formwerkzeughälften 17 und 18 ein erstes Formwerkzeug ausgebildet, in welchem eine Kavität entsteht, die in Relation zum biegeschlaffen Gewebe (Textil) 23 im wesentlichen auf Seiten des Formwerkzeugs 17 ausgestaltet ist.

Nunmehr wird die Plastifizier- und Einspritzeinheit 28 an das erste Formwerkzeug angedockt und ein erstes Kunststoffmaterial in die Kavität eingespritzt. Dieses erste Kunststoffmaterial 24 bedeckt das biegeschlaffe Gewebe (Textil) 23 im Wesentlichen auf einer Seite - oder mit anderen Worten, das biegeschlaffe Gewebe (Textil) 23 kommt auf einer Oberfläche des so hergestellten Produktes zu liegen. Natürlich ist es möglich, das biegeschlaffe Gewebe (Textil) 23 nur an ausgewählten Stellen anzuordnen, so dass die Oberfläche des so hergestellten Produktes nur partiell mit dem Gewebe Textil versehen ist.

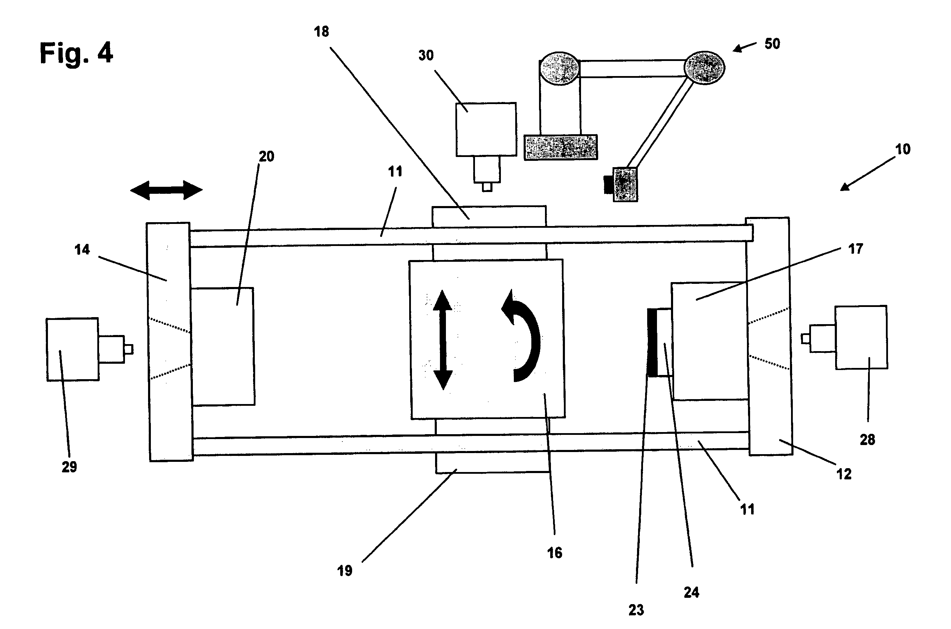

Anschließend wird die Schließeinheit wieder geöffnet, was in Figur 4 dargestellt ist, wobei das im ersten Schritt hergestellte Zwischenprodukt aus dem Gewebe (Textil) 23 (nunmehr nicht mehr biegeschlaff) und dem ersten Kunststoffmaterial 24 an der Formwerkzeughälfte 17 verbleibt.

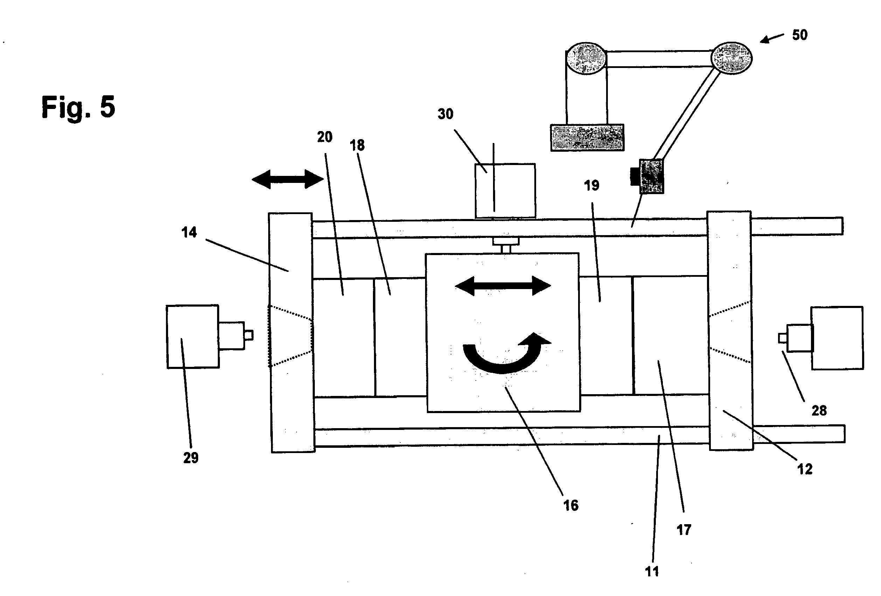

Anschließend wird - wie ebenfalls in Fig. 4 angedeutet - die Wendeplatte 16 um 180° gedreht, um die Formwerkzeughälfte 19 der Formwerkzeughälfte 17 zuzuordnen. Danach wird die Schließeinheit wieder geschlossen (vgl. Fig. 5), wobei nunmehr eine Kavität bzgl. des vorher hergestellten Zwischenproduktes auf Seiten der Formwerkzeughälfte 19 entsteht. In diese Kavität wird mittels der Plastifizier- und Einspritzeinheit 30 ein zweites Kunststoffmaterial eingespritzt, welches vorliegend über die Wendeplatte 16 und die Formwerkzeughälfte 19 geleitet wird. Alternativ könnte die Plastifizier- und Einspritzeinheit 30 auch unmittelbar an der Formwerkzeughälfte 19 angedockt werden.

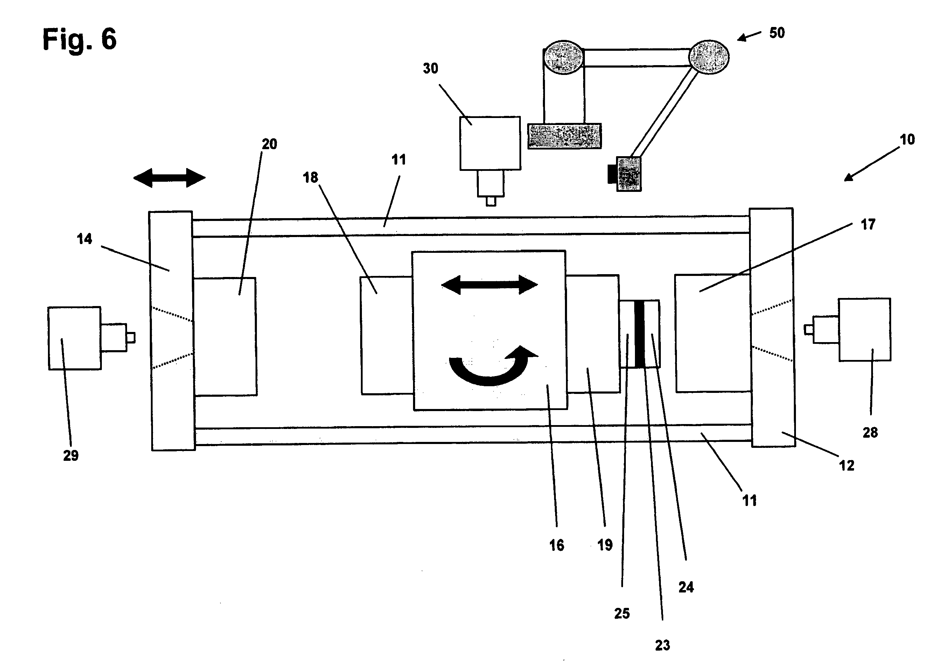

Nach dem zumindest teilweisen Aushärten des zweiten Kunststoffmaterials 25 wird die Schließeinheit 10 wieder geöffnet, wobei das so hergestellte Zwischenprodukt an der Formwerkzeughälfte 19 verbleibt. Nunmehr liegt ein Kunststoffprodukt vor, bei dem das Gewebe 23 sandwichartig zwischen den beiden aus dem ersten Kunststoffmaterial 24 und dem zweiten Kunststoffmaterial 25 gebildeten Schichten aufgenommen ist. Dabei ist die Darstellung in Fig. 6 nur sehr schematisch zu bezeichnen, da das Gewebe (Textil) an dem Produkt nicht mehr zu erkennen ist. Vielmehr ist es vollständig von den verschiedenen Schichten umhüllt. Das Gewebe (Textil) ist dabei im Wesentlichen vollflächig eingebettet. Die ersten und zweiten Kunststoffmaterialen können identisch aber auch unterschiedlich sein.

Gemäß einer vereinfachten Ausführungsform könnte man an dieser Stelle die Produktion bereits beenden und das Produkt zur weiteren Verarbeitung transportieren.

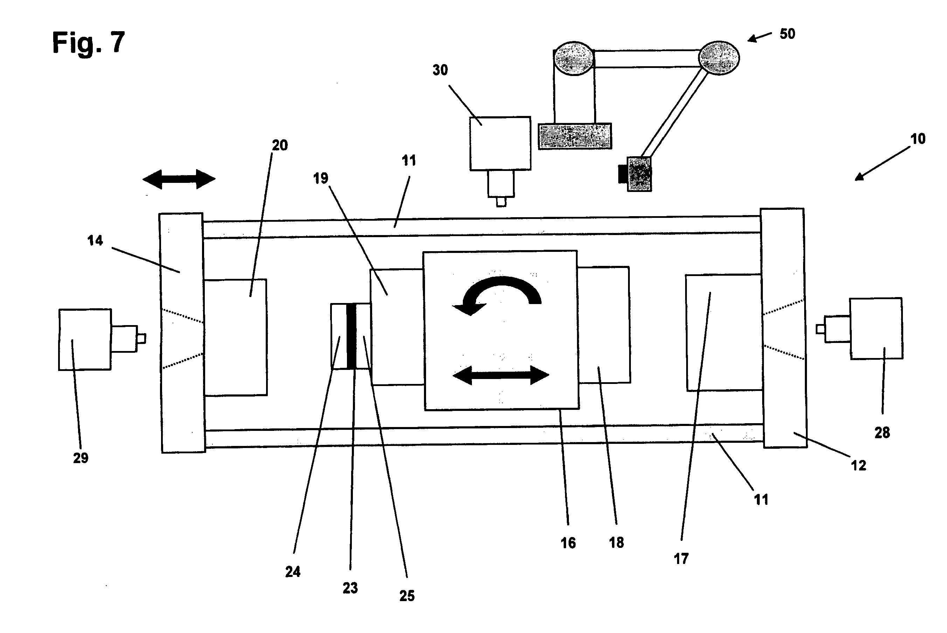

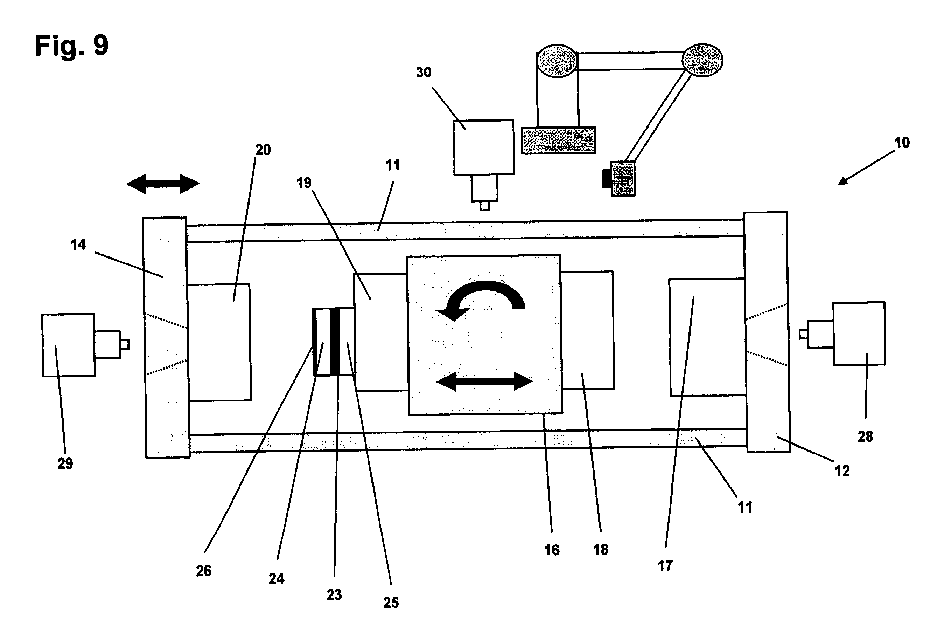

Bei der vorliegenden Ausführungsform allerdings wird die Wendeplatte 16 nochmals gedreht, so dass das bislang hergestellte Zwischenprodukt bestehend aus den Schichten 23 bis 25 zusammen mit der Formwerkzeughälfte 19 der Formwerkzeughälfte 20 zugeordnet wird (vgl. Fig. 7). Nach dem Schließen der Schließeinheit 10 wird durch die Formwerkzeughälften 19 und 20 ein drittes Formwerkzeug gebildet, welches nunmehr eine Kavität aufweist, welches auf Seite des Formwerks 20 benachbart dem Zwischenprodukt angeordnet ist. Durch Andocken der Plastifizier- und Einspritzeinheit 29 und Einbringen eines dritten Kunststoffmaterials wird nun eine Beschichtung gebildet (vgl. Bezugszeichen 26 in Fig. 9), welche definierte Oberflächeneigenschaften besitzt.

Nach dem zumindest teilweisen Aushärten und Öffnen kann dann das fertig gestellte Produkt entnommen werden.

Mit geringen Modifikationen der in den Fig. 1 bis 9 dargestellten Ausführungsform ist es unter Beibehaltung der Erfindung möglich, weitere Alternativen zu realisieren.

Eine nicht von der Erfindung abgedeckte Ausführungsvariante ist dadurch gegeben, dass beispielsweise anstelle der Plastifizier- und Einspritzeinheit 28 eine Einspritzeinrichtung für ein Imprägniermaterial vorgesehen wird. Wird in einem ersten Schritt nämlich ein hochviskoses Kunststoffmaterial eingespritzt, so kann es sein, dass das Gewebematerial (Verstärkungstextil) nicht vollständig mit dem Material durchdrungen und im Kern immer noch biegeschlaff ist. Der Verstärkungseffekt wird dadurch gemindert. Um eine vollständige Durchtränkung zu realisieren kann daher in einem ersten Schritt ein Imprägnieren vorgenommen werden, bei dem im wesentlichen das biegeschlaffe Gewebematerial (Verstärkungstextil) 23 in der entsprechend klein ausgestalteten Kavität des ersten Formwerkzeugs - bestehend aus den Formwerkzeughälften 17 und 18 vollständig durchtränkt wird. Anschließend werden in den nachfolgenden Schritten und wie oben beschrieben zwei weitere Kunststoffmaterialien aufgebracht, so dass bei dem so hergestellten Produkt nunmehr ein imprägniertes Gewebe (Textil) sandwichartig zwischen zwei Kunststoffschichten aufgenommen ist. Dies ergibt eine hervorragende (vollflächige oder partielle) Verstärkung.

Weiter können gemäß einer bevorzugten Ausführungsvariante anstelle einer oder mehrerer Plastifizier- und Einspritzeinheiten 28 bis 30 Polyurethan-Mischköpfe vorgesehen sein, so dass nicht ein Thermoplast, sondern ein Duroplastmaterial in eine Kavität eingebracht wird. Dies ist insbesondere dann interessant, wenn eine Oberflächenbeschichtung (z.B. die Schicht 26) mit speziell gewünschten Eigenschaften (Haptik, Lichtechtheit etc) gefordert ist.

Auch ist es möglich, einen Lack als Oberflächenmaterial vorzusehen, um so ein bereits lackiertes Produkt (Lackschicht wäre dann auch die Schicht 26) zu entnehmen.

Gerade dann, wenn die erste Schicht als Imprägnierung ausgebildet ist, wie weiter oben beschrieben, kann es in Abweichung zur Ausführungsform in den Fig. 1 bis 9 wünschenswert sein, ein viertes Formwerkzeug bilden zu können, um neben einer ersten Imprägnierschicht, einer zweiten und dritten Kunststoffschicht ebenfalls eine Lackierung erreichen zu können. Wie man sieht, sind die Anwendungsmöglichkeiten der vorliegenden Erfindung breit gefächert.

Neben dem Gewebematerial (Verstärkungstextil) können bei jedem Verfahrensschritt weitere funktionale Elemente wie Sensoren oder dergleichen auf eine Oberfläche des Zwischenproduktes aufgebracht werden. Diese funktionalen Elemente werden dann in einem nachfolgenden Verarbeitungsschritt eingegossen, so dass sie integral mit dem Produkt vorliegen. Auch kann das Gewebe, Strickwerk oder Vlies (allg. Verstärkungstextil) partiell Metallfäden oder ähnliche Elemente aufweisen, die später aktuatorisch oder sensorisch betrieben (genutzt) werden.

Natürlich können noch eine Vielzahl weitere Bearbeitungseinrichtungen vorgesehen sein, mit denen in den verschiedenen Verfahrensabschnitten Beschichtungen, Belegungen, Bearbeitungen etc. durchgeführt werden können.

Mit der vorliegenden Erfindung können in unzähligen Gestaltungsvarianten Verstärkungsstrukturen in Kunststoffprodukte eingebracht werden, so dass gerade bei dünnen oder hoch belasteten Bauteilen die gewünschten mechanischen, thermischen, physikalischen oder andere Eigenschaften erzeugt werden können. Auch können entsprechende funktionale Elemente mit eingeformt werden, die im Bereich der Verstärkungsstruktur eventuell notwendig sind.

### Bezugszeichenliste

- 10: Schließeinheit
- 11: Holm
- 12: Feste Formaufspannplatte
- 14: Bewegliche Formaufspannplatte
- 16: Zwischen- und Wendeplatte
- 17: Werkzeughälfte an der festen Formaufspannplatte
- 18, 19: Werkzeughälften an der Zwischen- und Wendeplatte
- 20: Werkzeughälfte an der beweglichen Formaufspannplatte
- 23: Biegeschlaffes Gewebestruktur (biegeschlaffe, textile Verstärkungsstruktur)
- 24: Kunststoff- oder Imprägnierschicht
- 25: Kunststoffschicht
- 26: Oberflächen-, Lack- oder Kunststoffschicht
- 28: Erste Einspritzeinheit
- 29: Zweite Einspritzeinheit
- 30: Dritte Einspritzeinheit
- 50: Einlegeeinrichtung

## Patentansprüche

1. Verfahren zur Herstellung von Kunststoffprodukten mit integrierter Verstärkungsstruktur, bei dem mit einer Vorrichtung umfassend eine Mehrkavitäten-Schließeinheit (10) sowie zumindest zwei Vorrichtungen (28, 29, 30) zur Einbringung eines Harz- oder Kunststoffmaterials in eine Kavität eines Formwerkzeugs, folgende Schritte durchgeführt werden:
- Auflegen und Fixieren eines biegeschlaffen Gewebeelements (23) aus Fasern oder Fäden auf einer Formoberfläche einer ersten Formhälfte (18) eines Formwerkzeugs,
- Zuordnen einer zweiten Formhälfte (17) eines Formwerkzeugs der ersten Formhälfte und Schließen des so gebildeten ersten Formwerkzeugs unter Ausbildung einer ersten Kavität,
- Einbringen eines ersten Kunststoff- oder Harzmaterials in die erste Kavität unter Ausbildung einer ersten Schicht auf einer Seite des biegeschlaffen Gewebeelements (23),
- Öffnen des ersten Formwerkzeugs nach dem zumindest teilweisen Aushärten der ersten Schicht, wobei das mit Kunststoff oder Harz beschichtete, ein erstes Zwischenprodukt bildende Gewebeelement (23) auf einer zweiten Formhälfte (17) des ersten Formwerkzeugs verbleibt,
- Zuordnen einer dritten Formhälfte (19) eines Formwerkzeugs der zweiten Formhälfte (17) auf der das Zwischenprodukt verblieben ist, und Schließen des so gebildeten zweiten Formwerkzeugs unter Ausbildung einer Kavität, die bezogen auf das Gewebe (23) der ersten aufgebrachten Schicht gegenüber liegt,
- Einbringen eines weiteren Kunststoff- oder Harzmaterials in diese Kavität zur Ausbildung einer zweiten Schicht auf der anderen Seite des biegeschlaffen Gewebeelements (23),
- Öffnen des zweiten Formwerkzeugs nach zumindest teilweiser Aushärtung der zweiten Schicht und
- Entnehmen des so hergestellten Produkts.

2. Verfahren nach Anspruch 1,
**dadurch gekennzeichnet,**
**dass** nach dem Ausbilden der zweiten Schicht und dem Öffnen des zweiten Formwerkzeugs das so hergestellte Produkt auf einer Formhälfte (19) des zweiten Formwerkzeugs verbleibt,
Zuordnen einer vierten Hälfte (20) eines Formwerkzeugs der Formhälfte (19), auf der das Zwischenprodukt verblieben ist, und Schließen des so gebildeten dritten Formwerkzeugs,
unter Ausbildung einer weiteren Kavität angrenzend zur ersten oder zweiten gebildeten Schicht und
Einbringen eines weiteren Kunststoffmaterial, eines Harzes oder eines Lackmaterials unter Ausbildung einer dritten Schicht in diese Kavität.

3. Verfahren nach Anspruch 1 oder 2,
**dadurch gekennzeichnet,**
**dass** die erste und/oder die zweite und/oder die dritte Kunststoffschicht durch ein Extrudier- oder Spritzgussverfahren hergestellt und eingebracht wird bzw. werden.

4. Verfahren nach einem der Ansprüche 1 bis 3,
**dadurch gekennzeichnet,**
**dass** die erste und/oder die zweite und/oder die dritte Schicht durch ein Reaktionsgießverfahren hergestellt und eingebracht wird bzw. werden.

5. Verfahren nach einem der Ansprüche 1 bis 4,
**dadurch gekennzeichnet,**
**dass** das biegeschlaffe Gewebeelement (23) aus einem Gewebe, Vlies, Gewirk, Gestrick gebildet wird.

6. Verfahren nach einem der Ansprüche 1 bis 5,
**dadurch gekennzeichnet,**
**dass** vor dem Aufbringen einer Schicht ein Haftvermittler aufgetragen wird.

7. Verfahren nach einem der vorhergehenden Ansprüche,
**dadurch gekennzeichnet,**
**dass** vor, gleichzeitig oder nach der Aufbringung einer Schicht weitere funktionale Elemente auf das Zwischenprodukt aufgebracht werden.

8. Vorrichtung zur Durchführung des Verfahrens gemäß den Ansprüchen 1 bis 7 umfassend
- zumindest drei Formwerkzeughälften (17, 18, 19) zur Ausbildung von zumindest zwei Formwerkzeugen mit unterschiedlichen Kavitäten,
- eine Schließeinheit (10) zur Aufnahme, zur wechselweisen Zuordnung der verschiedenen Formwerkzeughälften (17, 18, 19) und zur Aufbringung der Schließkraft für jedes Formwerkzeug,
- zumindest zwei Vorrichtungen (28, 29) zur Einbringung von Kunststoff- oder Harz-Materialien in die Kavitäten,
- eine Einlegevorrichtung (50) zum Auflegen eines biegeschlaffen Gewebes (23) auf die Kavitätsoberfläche einer Formwerkzeughälfte (18) und
- Mittel zum Fixieren des biegeschlaffen Gewebes auf der Kavitätsoberfläche der Formwerkzeughälfte (18), wobei
das erste Formwerkzeug so angepasst und ausgebildet ist, dass nach Einlegen des biegeschlaffen Gewebes (23) in das erste Formwerkzeug auf einer Seite des biegeschlaffen Gewebes (23) eine Kavität ausgebildet ist, die ein vollständiges Bedecken der einen Seite des Gewebes (23) mit Kunststoffmaterial oder Harz ermöglicht,
**dadurch gekennzeichnet, dass**
das zweite Formwerkzeug so angepasst und ausgebildet ist, dass das im ersten Formwerkzeug hergestellte Zwischenprodukt so im zweiten Formwerkzeug aufnehmbar ist, dass auf der gegenüberliegenden Seite des Gewebes (23) eine Kavität ausgebildet ist, die ein vollständiges Bedecken der anderen Seite des Gewebes (23) mit Kunststoffmaterial oder Harz ermöglicht.

9. Vorrichtung nach Anspruch 8,
**dadurch gekennzeichnet,**
**dass** zumindest vier Formwerkzeughälften (17, 18, 19, 20) vorgesehen sind.

10. Vorrichtung nach einem der Ansprüche 8 oder 9,
**dadurch gekennzeichnet,**
**dass** die Schließeinheit (10) zwei Aufspannplatten (12, 14) sowie eine dazwischen angeordnete und um eine Achse drehbare Zwischen- und Wendeplatte (16) umfasst.

11. Vorrichtung nach einem der Ansprüche 8 bis 10,
**dadurch gekennzeichnet,**
**dass** es sich bei der ersten und/oder der zweiten Einbringvorrichtung (28, 29) um eine Extrudervorrichtung, eine Plastifizier- und Einspritzvorrichtung und/oder eine Reaktionsgießvorrichtung handelt.

12. Vorrichtung nach einem der Ansprüche 8 bis 11,
**dadurch gekennzeichnet,**
**dass** eine Vorrichtung zur Aufbringung eines Klebe- oder Fixiermittels oder eines Haftvermittlers vorgesehen ist.

## Claims

1. A method for producing plastic products with integrated reinforcing structure, in which with a device comprising a multi-cavity clamping unit (10) and at least two devices (28, 29, 30) for the introduction of a resin- or plastic material into a cavity of a mould, the following steps are carried out:
- laying and fixing a flexible fabric element (23) of fibres or threads on a mould surface of a first mould half (18) of a mould,
- allocating of a second mould half (17) of a mould to the first mould half and closing of the thus formed first mould with the formation of a first cavity,
- introducing of a first plastic- or resin material into the first cavity with the formation of a first layer on one side of the flexible fabric element (23),
- opening of the first mould after the at least partial hardening of the first layer, wherein the fabric element (23), coated with plastic or resin and forming a first intermediate product, remains on a second mould half (17) of the first mould,
- allocating of a third mould half (19) of a mould to the second mould half (17) on which the intermediate product has remained, and closing of the thus formed second mould with the formation of a cavity, which lies opposite with respect to the fabric (23) of the first applied layer,
- introducing of a further plastic- or resin material into this cavity for the formation of a second layer on the other side of the flexible fabric element (23),
- opening of the second mould after at least partial hardening of the second layer and
- removing of the product which is thus produced.

2. The method according to Claim 1,
**characterized in that**
after the formation of the second layer and the opening of the second mould, the product which is thus produced remains on a mould half (19) of the second mould,
allocating of a fourth half (20) of a mould to the mould half (19), on which the intermediate product has remained, and closing of the thus formed third mould,
with the formation of a further cavity adjacent to the first or second formed layer and
introducing of a further plastic material, of a resin or of a lacquer material with the formation of a third layer into this cavity.

3. The method according to Claim 1 or 2,
**characterized in that**
the first and/or the second and/or the third plastic layer is or respectively are produced and introduced by an extrusion or injection moulding method.

4. The method according to one of Claims 1 to 3,
**characterized in that**
the first and/or the second and/or the third layer is or respectively are produced and introduced by a reaction casting method.

5. The method according to one of Claims 1 to 4,
**characterized in that**
the flexible fabric element (23) is formed from a fabric, non-woven material, interlaced fabric, knitted fabric.

6. The method according to one of Claims 1 to 5,
**characterized in that**
a bonding agent is applied before the application of a layer.

7. The method according to one of the preceding claims,
**characterized in that**
before, at the same time as, or after the application of a layer, further functional elements are applied onto the intermediate product.

8. An apparatus for carrying out the method according to Claims 1 to 7, comprising
- at least three mould halves (17, 18, 19) for the formation of at least two moulds with different cavities,
- a clamping unit (10) for receiving, for the alternate allocation of the different mould halves (17, 18, 19) and for the applying of the clamping force for each mould,
- at least two devices (28, 29) for the introduction of plastic- or resin materials into the cavities,
- an insertion device (50) for the laying of a flexible fabric (23) onto the cavity surface of a mould half (18) and
- means for fixing the flexible fabric on the cavity surface of the mould half (18), wherein
the first mould is adapted and constructed such that after the inserting of the flexible fabric (23) into the first mould on a side of the flexible fabric (23), a cavity is formed which enables a complete covering of the one side of the fabric (23) with plastic material or resin,
**characterized in that**
the second mould is adapted and constructed such that the intermediate product which is produced in the first mould is able to be received in the second mould such that on the opposite side of the fabric (23) a cavity is formed which enables a complete covering of the other side of the fabric (23) with plastic material or resin.

9. The apparatus according to Claim 8,
**characterized in that**
at least four mould halves (17, 18, 19, 20) are provided.

10. The apparatus according to one of Claims 8 or 9,
**characterized in that**
the clamping unit (10) comprises two clamping plates (12, 14) and an intermediate and turnover plate (16) arranged therebetween and rotatable about an axis.

11. The apparatus according to one of Claims 8 to 10,
**characterized in that**
the first and/or the second introduction device (28, 29) is an extruder device, a plasticizing and injection device and/or a reaction casting device.

12. The apparatus according to one of Claims 8 to 11,
**characterized in that**
a device is provided for the application of an adhesive- or fixing means or of a bonding agent.

## Revendications

1. Procédé pour la fabrication de produits en matière plastique ayant une structure de renforcement intégrée, dans lequel, avec un dispositif comprenant une unité de fermeture à plusieurs cavités (10) ainsi qu'au moins deux dispositifs (28, 29, 30) pour introduire un matériau de résine ou de matière plastique dans une cavité d'un moule, les étapes suivantes sont effectuées :
- pose et fixation d'un élément d'entoilage (23) mou et flexible à fibres ou à fils sur une surface de moule d'une première moitié (18) d'un moule,
- attribution d'une deuxième moitié (17) d'un moule à la première moitié de moule et fermeture du premier moule ainsi formé en formant une première cavité,
- introduction d'un premier matériau de matière plastique ou de résine dans la première cavité en formant une première couche sur un côté de l'élément d'entoilage (23) mou et flexible,
- ouverture du premier moule après le durcissement au moins partiel de la première couche, sachant que l'élément d'entoilage (23) revêtu de matière plastique ou de résine et formant un premier produit intermédiaire, reste sur une deuxième moitié de moule (17) du premier moule,
- attribution d'une troisième moitié (19) d'un moule à la deuxième moitié de moule (17) sur laquelle le produit intermédiaire est resté, et fermeture de la deuxième moule ainsi formée en formant une cavité qui est opposée à la première couche appliquée, par rapport à l'entoilage (23),
- introduction d'un matériau de matière plastique ou de résine supplémentaire dans cette cavité pour former une deuxième couche sur l'autre côté de l'élément d'entoilage (23) mou et flexible,
- ouverture du deuxième moule après durcissement au moins partiel de la deuxième couche et
- retrait du produit ainsi fabriqué.

2. Procédé selon la revendication 1,
**caractérisé en ce qu'**
après la formation de la deuxième couche et l'ouverture du deuxième moule, le produit ainsi fabriqué reste sur une moitié (19) du deuxième moule,
qu'une quatrième moitié (20) d'un moule est attribuée à la moitié de moule (19) sur laquelle le produit intermédiaire est resté, et que le troisième moule ainsi formé est fermé,
en formant une cavité supplémentaire adjacente à la première ou à la deuxième couche formée et qu'un matériau de matière plastique, une résine ou un vernis supplémentaire est introduit en formant une troisième couche dans cette cavité.

3. Procédé selon la revendication 1 ou 2,
**caractérisé en ce que**
la première et/ou la deuxième et/ou la troisième couche de matière plastique est/sont fabriquée(s) et appliquée(s) par un procédé d'extrusion ou de moulage par injection.

4. Procédé selon l'une des revendications 1 à 3,
**caractérisé en ce que**
la première et/ou la deuxième et/ou la troisième couche est/sont fabriquée(s) et appliquée(s) par un procédé de coulée à réaction.

5. Procédé selon l'une des revendications 1 à 4,
**caractérisé en ce que**
l'élément d'entoilage (23) mou et flexible est formé d'un tissu, d'un non-tissé, d'un tissu à mailles, d'un tissu tricoté.

6. Procédé selon l'une des revendications 1 à 5,
**caractérisé en ce qu'**
un promoteur d'adhérence est fourni avant d'appliquer une couche.

7. Procédé selon l'une des revendications précédentes,
**caractérisé en ce que**
des éléments fonctionnels supplémentaires sont appliqués sur le produit intermédiaire, avant, parallèlement à, ou après l'application d'une couche.

8. Dispositif pour exécuter le procédé selon les revendications 1 à 7, comprenant
- au moins trois moitiés de moule (17, 18, 19) pour former au moins deux moules avec des cavités différentes,
- une unité de fermeture (10) pour recevoir, attribuer réciproquement les différentes moitiés de moule (17, 18, 19) et pour appliquer la force de fermeture pour chaque moule,
- au moins deux dispositifs (28, 29) pour introduire des matériaux de matière plastique ou de résine dans les cavités,
- un dispositif de pose (50) pour poser un entoilage (23) mou et flexible sur la cavité de surface d'une moitié de moule (18) et
- des moyens pour fixer l'entoilage mou et flexible sur la cavité de surface de la moitié de moule (18), sachant que
le premier moule est ainsi adapté et formé qu'après la pose de l'entoilage (23) mou et flexible dans le premier moule, une cavité est formée sur un côté de l'entoilage (23) mou et flexible, laquelle permet de recouvrir complètement l'un côté de l'entoilage (23) avec un matériau de matière plastique ou de résine,
**caractérisé en ce que**
le deuxième moule est ainsi adapté et formé que le produit intermédiaire fabriqué dans le premier moule peut être reçu dans le deuxième moule de telle sorte qu'une cavité soit formée sur le côté opposé de l'entoilage (23), laquelle permet de recouvrir complètement l'autre côté de l'entoilage (23) avec un matériau de matière plastique ou de résine.

9. Dispositif selon la revendication 8,
**caractérisé en ce qu'**
au moins quatre moitiés de moule (17, 18, 19, 20) sont prévues.

10. Dispositif selon l'une des revendications 8 ou 9,
**caractérisé en ce que**
l'unité de fermeture (10) comprend deux plaques de serrage (12, 14) ainsi qu'une plaque intermédiaire et réversible (16) disposée entre celles-ci et tournant sur un axe.

11. Dispositif selon l'une des revendications 8 à 10,
**caractérisé en ce que**
le premier et/ou le deuxième dispositif d'introduction (28, 29) est un dispositif d'extrusion, un dispositif de plastification et d'injection et/ou un dispositif de coulée à réaction.

12. Dispositif selon l'une des revendications 8 à 11,
**caractérisé en ce qu'**
un dispositif est prévu pour appliquer un moyen de collage ou de fixation ou un promoteur d'adhérence.
